# FASCICULE DE BREVET EUROPEEN

(11) **EP 1 694 879 B1**
(45) Date de publication et mention de la délivrance du brevet: **21.05.2014**
(21) Numéro de dépôt: 04797122.1
(22) Date de dépôt: 02.11.2004
(51) Int. Cl.: C23C 2/26, C23C 2/02, C23C 24/00, C23C 24/08

(54) **PROCEDE DE REVETEMENT D UNE SURFACE METALLIQUE PAR UNE COUCH E ULTRAFINE**
VERFAHREN ZUM BESCHICHTEN EINER METALLOBERFLÄCHE MIT EINER ULTRAFEINEN SCHICHT
METHOD FOR COATING A METAL SURFACE WITH AN ULTRAFINE LAYER

(30) Priorité: 17.12.2003 BE 200300666
(43) Date de publication de la demande: 30.08.2006
(73) Titulaire: CENTRE DE RECHERCHES METALLURGIQUES asbl - CENTRUM VOOR RESEARCH IN DE METALLURGIE vzw, B-1000 BRUXELLES (BE)
(72) Inventeur: LE CRAZ, Sébastien, B-4000 LIEGE (BE)
(74) Mandataire: Pronovem
(86) Numéro de dépôt international: PCT/BE2004/000157
(87) Numéro de publication internationale: WO 2005/059196

(56) Documents cités:
- WO-A-00/68460
- WO-A-02/086194
- WO-A-03/048403
- JP-A- 1 011 983
- US-A- 5 853 850
- US-A1- 2002 142 150
- PATENT ABSTRACTS OF JAPAN vol. 013, no. 187 (C-592), 2 mai 1989 (1989-05-02) -& JP 01 011983 A (NISSHIN STEEL CO LTD), 17 janvier 1989 (1989-01-17)
- PATENT ABSTRACTS OF JAPAN vol. 1998, no. 03, 27 février 1998 (1998-02-27) -& JP 09 296277 A (NKK CORP), 18 novembre 1997 (1997-11-18)
- PATENT ABSTRACTS OF JAPAN vol. 013, no. 134 (C-581), 4 avril 1989 (1989-04-04) & JP 63 297576 A (NISSHIN STEEL CO LTD), 5 décembre 1988 (1988-12-05)
- PATENT ABSTRACTS OF JAPAN vol. 012, no. 301 (C-521), 16 août 1988 (1988-08-16) -& JP 63 072887 A (NISSHIN STEEL CO LTD), 2 avril 1988 (1988-04-02) cité dans la demande

## Description

### Objet de l'invention

La présente invention se rapporte à l'amélioration du procédé décrit dans la demande de brevet internationale WO-A-03/048403 grâce à l'utilisation d'additifs chimiques influençant la réaction de dépôt d'une couche ultrafine de nanoparticules d'oxyde. L'ajout de tels composés permet d'obtenir des couches d'épaisseur encore plus faible que dans la demande de brevet précitée, c'est-à-dire d'épaisseur typiquement inférieure à 100 nm.

Le document WO 03/048403 A décrit un procédé pour revêtir en continu une bande métallique en mouvement avec un revêtement comprenant une couche nanométrique ultrafine (entre 20 et 2000nm), à partir d'une solution aqueuse contenant des nanoparticules d'oxydes, dans des conditions de pH contrôlé, à une température de substrat supérieure à 200°C et avec une durée de dépôt inférieure à 10 secondes.

### Arrière-plan technologique et étant de la technique

Le procédé décrit dans la demande WO-A-03/048403 A1 s'inscrit dans un projet global de réduction des coûts de production des bandes métalliques pré-peintes. Dans ce cadre, les sidérurgistes souhaitent intégrer le procédé de laquage en fin de ligne de galvanisation.

La principale difficulté pour parvenir à ce résultat a été de trouver un traitement de conversion de la bande suffisamment rapide pour être placé entre la galvanisation et le traitement de peinture. Le procédé précité a aussi été pensé comme une alternative aux traitements à base de chromates.

Basé sur l'utilisation de la chaleur résiduelle de la bande après galvanisation et essorage, ce procédé ne demande aucun apport énergétique extérieur pour fonctionner.

Côté installation, ce dernier est de préférence réalisé dans le brin descendant qui suit le bain de zinc. D'un point de vue pratique, il peut être installé à la place de la cuve d'eau déminéralisée qui finalise le refroidissement par jets à brouillard d'eau. Le système compact de dépôt envisagé ici peut être un bain ou un système d'aspersion (lame d'eau, jet par spray, etc.). Ainsi, moyennant quelques modifications, l'investissement pour le nouvel équipement est limité.

### Premier enjeu : couche ultrafine

Les couches ultrafines, typiquement inférieures à 100 nm, réalisées selon la méthode proposée ne sont envisageables que pour des solutions faiblement concentrées en particules, des températures de bande faibles ou encore les deux. La possibilité de pouvoir produire des dépôts de ce type aussi bien pour des solutions fortement concentrées en nanoparticules et/ou à haute température serait très appréciable pour une adaptation aisée en ligne du procédé.

De plus, cet objectif est crucial pour l'obtention d'un dépôt parfaitement adhérent au métal et pour une bonne cohésion interne de la couche d'oxyde. En effet, pour une solution faiblement concentrée, les nanoparticules en suspension sont loin les unes des autres et donc peu enclines à s'agglomérer correctement lors de l'évaporation du solvant.

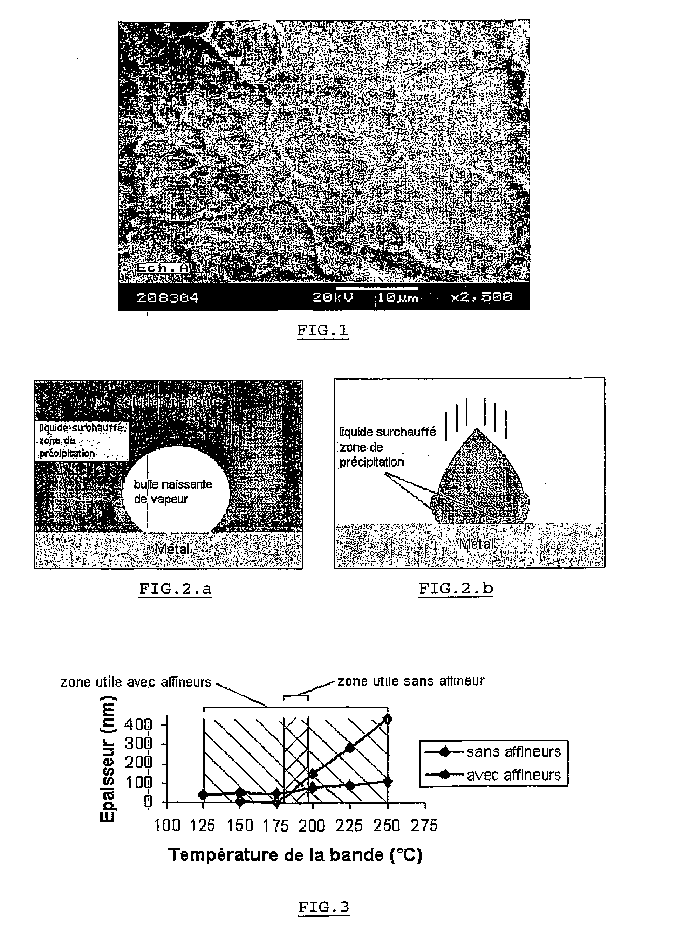

Cependant, un problème engendré par l'utilisation de solutions moyennement et fortement concentrées est la formation de surépaisseurs localisées qui forment un réseau de "nervures", très friable à la surface du dépôt d'oxyde, comme illustré sur la figure 1. Celles-ci proviennent de la précipitation préférentielle à l'interface entre la solution et la phase vapeur engendrée pendant la trempe, comme décrit schématiquement sur la figure 2. Ceci est visible à la fois sur les échantillons réalisés en bain (figure 2.a) ou par aspersion (figure 2.b) et est néfaste pour l'accrochage ultérieur d'une peinture.

On connaît, par le document JP-A-63 072887, un procédé de production d'une bande d'acier au trempé à chaud présentant une excellente résistance à la corrosion et une bonne résistance mécanique, tel que, avant séchage de la première couche constituée de zinc ou d'aluminium, on pulvérise à la surface de la bande une solution aqueuse contenant de la silice et/ou de l'aluminium dissous, du silicate de lithium, etc., pour former une couche d'oxyde comprenant SiO₂, Al₂O₃ ou Li₂SiO, individuellement ou dans un mélange. Cependant, un film de chromate est formé en outre sur la couche d'oxyde pour augmenter la résistance à la corrosion et l'adhérence de la couche d'oxyde, contrairement au procédé de la demande antérieure WO-A-03/048403, qui était exempt de chrome hexavalent. Ceci montre qu'une bonne adhérence des nanoparticules est loin d'être évidente.

Le document JP-A-62 166667 divulgue un procédé de formation d'une couche d'oxyde à la surface d'une bande d'acier revêtue au trempé à chaud d'une couche de Zn ou d'alliage Zn-Al, en vue de prévenir la décoloration en gris foncé de la bande. Une solution contenant un ou plusieurs des oxydes ZrO₂, Cr₂O₃, Al₂O₃, Y₂O₃, CeO₂, ZrBiO₄ et Sb₂O₃ est pulvérisée sur la bande après trempé et dont la température est ≥ 100°C à une concentration dans l'intervalle 1-100 mg/m². L'eau est évaporée par la chaleur intense de la bande d'acier, avec formation du film d'oxyde. Un film de chromate est formé ensuite sur la couche d'oxyde précitée. Il est à noter que le contrôle de l'épaisseur de la couche n'est pas envisagé ni décrit alors qu'il est crucial pour la bonne adhérence du dépôt. Il semble que la couche de chromate est là pour compenser cette lacune.

### Second enjeu : une meilleure stabilité de la solution en fonction de la température

En plongeant dans le bain, la bande transfère sa chaleur a la solution colloïdale. Afin d'éviter une surchauffe de cette dernière et donc une dégradation du bain, il est évidemment prévu d'évacuer le trop plein d'énergie grâce à une circulation extérieure et un échangeur de chaleur. Or, malgré la présence de cette installation, on a constaté une dégradation de la solution. Il semble qu'en soit responsable l'excès de chaleur stocké à l'interface métal-solution qui provoque la précipitation de la solution.

Afin de pouvoir garantir une durée de vie du bain satisfaisante, il est indispensable de trouver une méthode pour permettre l'utilisation de la solution même jusqu'à ébullition du solvant.

### Troisième enjeu : une plus grande marge de manoeuvre

Il est possible d'adapter l'équipement de refroidissement précédant le bac contenant la solution colloïdale ou les rampes de sprays afin de pouvoir assurer une température d'entrée constante au cours du temps. La maîtrise de ce paramètre est nécessaire pour assurer une épaisseur constante du dépôt de nanoparticules sur le substrat.

Cependant, pour être concurrentiel par rapport à un traitement à bande froide placée au même endroit, outre la gestion du bain qui est commune, il serait préférable de pouvoir s'affranchir des exigences sur la précision de la température ou de les réduire. Ainsi, afin d'être moins contraignant pour l'utilisateur, ce procédé se doit de pouvoir fonctionner avec une incertitude assez élevée sur la valeur de la température.

Un autre inconvénient d'un traitement dit "dépôt-trempe" comme celui-ci par rapport à un procédé à froid est qu'il est, en plus d'être influencé par un changement de température du substrat, sensible à une variation d'épaisseur de la bande. En effet, à température donnée, pour un matériau donné, la quantité d'énergie thermique emmagasinée est fonction du volume du corps, donc de l'épaisseur dans le cas d'un produit plat. Or, sur une ligne de galvanisation, on peut traiter des bandes d'acier d'épaisseurs différentes.

Le document JP 01-011983 A décrit le revêtement d'une bande d'acier obtenue au trempé à chaud dans un bain de zinc ou d'alliage zinc-aluminium fondu, à une température supérieure à 100°C, par pulvérisation d'une solution d'oxydes, tels que ZrO₂, Cr₂O₃, Al₂O₃, Y₂O₃, CeO₂, ZrBiO₄ et Sb₂O₃, à une densité de couche de 1-100 mg/m² environ, l'eau de la solution étant évaporée par la chaleur intense de la bande d'acier pour un former un film d'oxyde. Un film de chromate est ensuite formé sur le film d'oxyde. La détérioration d'aspect argenté/blanc de la bande d'acier obtenue au trempé à chaud suite au changement de coloration vers le gris foncé peut être ainsi empêchée.

Le document US 5,853,850 A décrit le revêtement d'une bande d'acier revêtue d'un film de lubrifiant en vue d'obtenir une excellente phosphatabilité, par formation d'un revêtement contenant un acide silicique ou un silicate sur la bande d'acier, conférant une rugosité de surface déterminée à la bande, la teneur de l'acide silicique ou du silicate dans le revêtement étant comprise entre 1 et 200 mg/mm² (rapporté au poids de silice sèche).

Le document JP 09-296277 A décrit une bande d'acier galvanisé revêtue d'une couche de conversion chimique puis d'une résine organique d'épaisseur supérieure à 100 microns via une couche adhésive, la couche de conversion chimique étant un film de revêtement formé en appliquant une solution contenant de la silice colloïdale de type humide, où la taille moyenne des particules de silice est comprise entre 4 et 10 nm et en effectuant un séchage, le poids de silice de revêtement étant compris entre 20 et 100 mg/m², exprimés en termes de SiO₂.

### Buts de l'invention

La présente invention vise à fournir un procédé pour recouvrir un métal d'un film d'oxyde protecteur ultrafin, de silicium.

Un but complémentaire de l'invention est de permettre une souplesse maximum du procédé par rapport à la température d'entrée de la bande dans le bain.

Un autre but de l'invention est de garantir une reproductibilité du dépôt en terme d'épaisseur à faible ou fort poids de couche.

Un autre but de l'invention est de garantir une durée de vie de la solution conforme aux exigences du métallurgiste.

### Principaux éléments caractéristiques de l'invention

Un premier objet de la présente invention concerne un procédé pour revêtir en continu un substrat en mouvement comme une bande métallique en acier, le revêtement formé étant un film ultrafin d'épaisseur comprise entre 10 à 100 nm, déposé sur le substrat :
- à partir d'une solution contenant des nanoparticules d'oxydes de silicium ou silice, SiO₂, et au moins un additif chimique, appelé affineur,
- dans des conditions de pH basique contrôlé compris entre 9 et 13,
- ledit substrat étant à une température supérieure à 120°C,
- la durée totale du dépôt étant inférieure à 5 secondes, et de préférence inférieure à 1 seconde,
caractérisé en ce que l'affineur, est sélectionné dans le groupe de composés constitué par le catéchol et ses dérivés, les borates, les carbonates et hydrogénocarbonates de sodium et de potassium, l'hydroxyde d'ammonium et les amines solubles dans l'eau.

Dans le cadre de l'invention, le substrat à revêtir est soit un métal nu, de préférence l'acier, l'acier inoxydable (ou inox), l'aluminium, le zinc ou le cuivre, soit un premier métal revêtu d'un second métal, de préférence une bande d'acier recouverte d'une couche de zinc, d'aluminium, d'étain ou d'un alliage d'au moins deux de ces métaux.

Les nanoparticules en solution comprennent en outre des oxydes, TiO₂, ZrO₂, Al₂O₃, CeO₂, Sb₂O₅, Y₂O₃, ZnO, SnO₂, ou des mélanges de ces oxydes, sont hydrophiles et/ou hydrophobes, ont une taille comprise entre 1 et 100 nm et se trouvent dans la solution à une teneur comprise entre 0,1 et 10 %, et de préférence entre 0,1 et 1%.

La concentration en affineur est comprise entre 1 et 20 g par litre (g/L) de solution, de préférence entre 5 et 10 g/L.

Toujours selon l'invention, le pH de la solution est adapté de façon à permettre le décapage d'oxydes superficiels sur le substrat métallique lors de son contact avec la solution, à conférer aux particules une charge électrique maximale pour éviter tout agglomérat dans la solution et à rendre les particules les plus réactives possible sans déstabiliser la solution.

Selon l'invention, le pH des solutions à base de nanoparticules de SiO₂ est basique et compris entre 9 et 13.

Avantageusement, le pH de la solution est adapté pour que la solution soit stable dans le temps.

Selon une première modalité d'application préférée de l'invention, le dépôt est réalisé par immersion de durée contrôlée du substrat dans un bac de trempe contenant la solution.

Selon une deuxième modalité d'application préférée de l'invention, le dépôt est réalisé par projection de la solution sur le substrat au moyen d'un gicleur, c'est-à-dire un dispositif, assisté ou non, à gaz sous pression, qui projette des gouttelettes de la solution.

Selon une troisième modalité d'application préférée de l'invention, le dépôt est réalisé par dépôt de la solution sur le substrat au moyen d'un rouleau.

Avantageusement, la solution qui vient en contact avec la bande est maintenue à une température inférieure à 100°C et de préférence inférieure à 80°C.

Avantageusement encore, la température du substrat au début du dépôt est supérieure à 125°C et inférieure à 250°C.

Lorsque le substrat possède déjà un revêtement métallique avant le traitement, la température du substrat au début du dépôt est avantageusement supérieure à 125°C et inférieure de 30 à 100°C à la température de fusion du métal de revêtement.

Lorsque le substrat possède un revêtement métallique effectué par trempage, comme par galvanisation au trempé, le dépôt est avantageusement effectué juste après le dépôt du revêtement métallique, avant que le substrat ne refroidisse.

De préférence, dans le cas d'un substrat sujet à une oxydation trop importante pour que celle-ci soit éliminée pendant le dépôt, on protège le substrat de contacts importants avec l'air grâce à un gaz neutre comme l'azote (N₂) ou l'argon.

De préférence encore, le dépôt en limité dans le temps en faisant varier la hauteur d'immersion dans le cas d'un dépôt dans une solution ou la longueur arrosée dans le cas d'une projection de la solution par des gicleurs.

Toujours selon l'invention, la solution est une solution aqueuse ou comprend tout autre solvant capable de disperser efficacement lesdites nanoparticules.

On ajoute avantageusement à la solution de nanoparticules des agents pour l'amélioration de la résistance à la corrosion et/ou l'adhérence avec le substrat ou la peinture, et/ou pour favoriser le glissement lors du formage.

On peut prévoir dans le procédé de l'invention que le substrat revêtu peut être rincé après post-traitement au moyen d'eau ou d'une solution à base de silanes organiques ou d'acide carboxylique contenant une fonction susceptible de former une liaison forte avec l'organique.

De préférence, le procédé de l'invention comprend des étapes :
- de mesure et de régulation du pH en continu,
- pour assurer le renouvellement de la solution et l'élimination des produits excédentaires de la réaction,
- pour assurer le mélange homogène du bain, en vue d'éviter des turbulences à sa surface.

Selon une modalité d'exécution avantageuse, on contrôle la température de la bande et du bain, le temps de séjour de la bande dans le bain, la concentration en nanoparticules dans le bain et le pH du bain. De même, le cas échéant, on contrôle avantageusement la température de la brande, le temps d'arrosage, la concentration en nanoparticules dans la solution projetée, le débit de projection et le pH.

Un deuxième objet de la présente invention concerne un produit métallurgique plat ou long, de préférence bande, fil, profilé ou tube, revêtu d'une couche protectrice ultrafine d'épaisseur inférieure à 100 mm, au moyen du procédé décrit ci-dessus, ladite couche protectrice comprenant au moins des nanoparticules d'oxyde SiO₂, caractérisé en ce que l'épaisseur dudit produit métallurgique, éventuellement celle de départ avant réalisation d'un profilé ou un tube, est comprise entre 0,15 et 5 mm.

### Brève description des figures

La figure 1, déjà mentionnée, représente un cliché de microscopie électronique à balayage d'une surface traitée selon l'invention, une couche de SiO₂ étant déposée avec une concentration de 2% en masse.
Les figures 2.a et 2.b, déjà mentionnées, représentent schématiquement les zones de précipitation potentielles lors de la mise en oeuvre du procédé de l'invention, respectivement en bain (a) ou par spray (b).
La figure 3 représente graphiquement l'évolution, mesurée par XPS, de l'épaisseur du revêtement de silice sur acier galvanisé mis en oeuvre selon la présente invention, en fonction de la température. Le revêtement est obtenu par tempe dans une solution à 2 % en SiO₂, avec et sans influence d'un affineur, en l'espèce le borate de sodium (5g/L),

### Description d'une forme d'exécution préférée de l'invention

L'innovation apportée dans le cadre de la présente invention repose sur le principe d'obtention de couches ultrafines de nanoparticules d'oxydes de silicium, où l'épaisseur desdites couches est limitée par l'incorporation dans le bain d'additifs chimiques antagonistes à la réaction de dépôt, qui sont appelés de ce fait "affineurs" par la Demanderesse.

Le phénomène de précipitation lors du dépôt et la stabilité du bain procèdent des mêmes principes chimiques. En effet, la précipitation par trempe est une compétition entre deux mécanismes opposés. On a, d'un part, la force qui permet la stabilité de la solution et donc la rupture des liaisons entre nanoparticules et d'autre part celle qui permet la précipitation.

Pour contrôler au mieux ces phénomènes, des composés comprenant certains éléments chimiques bien particuliers sont introduits dans la solution.

Le rôle de ces composés est de catalyser la dissolution de la couche ultra-mince et donc de lutter contre la précipitation massive et chaotique, c'est-à-dire éliminer le réseau de nervures en surface de l'oxyde par exemple. Ces composés sont appelés par la Demanderesse "affineurs" parce qu'ils permettent de diminuer le poids de la couche du dépôt. Ils sont en quelque sorte, d'un point de vue chimique, des "poisons" pour la réaction de dépôt.

La découverte de ces composés antagonistes pour la réaction permet d'envisager des qualités de dépôt équivalentes ou meilleures que celles obtenues par des traitements conventionnels à froids.

Ils peuvent permettre, dans une gamme de température de bande très large d'obtenir une épaisseur de dépôt de nanoparticules homogène (voir figure 3) et.donc un contrôle performant du poids de couche du dépôt. Il est aussi intéressant de constater que l'addition de ces espèces chimiques permet un dépôt à des températures plus basses, éventuellement descendant jusqu'à 120°C.

Ils peuvent aussi permettre selon leur concentration dans le bain d'obtenir des couches d'épaisseur ultrafine pour toute concentration en nanoparticules.

Ce type de composé doit être soluble dans le solvant dans les gammes de pH des solutions colloïdales envisagées et ne pas provoquer une déstabilisation de la suspension. En outre, grâce à leur capacité à rompre les liaisons inter-nanoparticules, ils peuvent augmenter le domaine de stabilité des solutions colloïdales, soit en température, soit en pH ou les deux.

Pour être performant, il faut que l'efficacité de ces composés augmente avec la température.

Selon la présente invention, ce sont des espèces minérales ou organiques qui sont associées à un ou plusieurs types de nanoparticules.

Selon la présente invention, pour le dépôt de nanoparticules de silice, les espèces les plus efficaces sont le catéchol, les borates, les carbonates et hydrogénocarbonates de sodium et de potassium, l'hydroxyde d'ammonium et les amines solubles dans l'eau.

Une fois le dépôt réalisé, le surplus de nanoparticules non agglomérées sous l'effet des affineurs et les affineurs résiduels eux-mêmes peuvent être rapidement éliminés par un rinçage.

Il est aussi intéressant de souligner que pour rester dans une logique de respect de l'environnement, les composés utilisés ne sont pas cancérigènes.

## Revendications

1. Procédé pour revêtir en continu un substrat en mouvement comme une bande métallique en acier, le revêtement formé étant un film ultrafin d'épaisseur comprise entre 10 à 100 nm, déposé sur le substrat :
- à partir d'une solution contenant des nanoparticules d'oxydes de silicium ou silice, SiO₂, et au moins un additif chimique, appelé affineur,
- dans des conditions de pH basique contrôlé compris entre 9 et 13,
- ledit substrat étant à une température supérieure à 120°C,
- la durée totale du dépôt étant inférieure à 5 secondes, et de préférence inférieure à 1 seconde,
**caractérisé en ce que** l'affineur est sélectionné parmi le groupe de composés constitué par le catéchol et ses dérivés, les borates, les carbonates et hydrogénocarbonates de sodium et de potassium, l'hydroxyde d'ammonium et les amines solubles dans l'eau.

2. Procédé selon la revendication 1, **caractérisé en ce que** le substrat à revêtir est soit un métal nu, de préférence l'acier, l'acier inoxydable (ou inox), l'aluminium, le zinc ou le cuivre, soit un premier métal revêtu d'un second métal, de préférence une bande d'acier recouverte d'une couche de zinc, d'aluminium, d'étain ou d'un alliage d'au moins deux de ces métaux.

3. Procédé selon la revendication 1, **caractérisé en ce que** la solution contient en outre des nanoparticules qui comprennent des oxydes choisis parmi TiO₂, ZrO₂, Al₂O₃, CeO₂, Sb₂O₅, Y₂O₃, ZnO, SnO₂, ou des mélanges de ces oxydes, sont hydrophiles et/ou hydrophobes, ont une taille comprise entre 1 et 100 nm et se trouvent dans la solution à une teneur comprise entre 0,1 et 10 %, et de préférence entre 0,1 et 1%.

4. Procédé selon la revendication 1, **caractérisé en ce que** la concentration en affineur est comprise entre 1 et 20 g par litre (g/L) de solution, de préférence entre 5 et 10 g/L.

5. Procédé selon l'une des revendications précédentes, **caractérisé en ce que** le pH de la solution est adapté de façon à permettre le décapage d'oxydes superficiels sur le substrat métallique lors de son contact avec la solution, à conférer aux particules une charge électrique maximale pour éviter tout agglomérat dans la solution et à rendre les particules les plus réactives possible sans déstabiliser la solution.

6. Procédé selon la revendication 5, **caractérisé en ce que** le pH de la solution est adapté pour que la solution soit stable dans le temps.

7. Procédé selon la revendication 1, **caractérisé en ce que** le dépôt est réalisé par immersion de durée contrôlée du substrat dans un bac de trempe contenant la solution.

8. Procédé selon la revendications 1, **caractérisé en ce que** le dépôt est réalisé par projection de la solution sur le substrat au moyen d'un gicleur, c'est-à-dire un dispositif, assisté ou non, à gaz sous pression, qui projette des gouttelettes de la solution.

9. Procédé selon la revendication 1, **caractérisé en ce que** le dépôt est réalisé par dépôt de la solution sur le substrat au moyen d'un rouleau.

10. Procédé selon la revendication 1, **caractérisé en ce que** la solution qui vient en contact avec la bande est maintenue à une température inférieure à 100°C et de préférence inférieure à 80°C.

11. Procédé selon la revendication 1, **caractérisé en ce que** la température du substrat au début du dépôt est supérieure à 125°C et inférieure à 250°C.

12. Procédé selon la revendication 1, **caractérisé en ce que**, lorsque le substrat possède déjà un revêtement métallique avant le traitement, la température du substrat au début du dépôt est supérieure à 125°C et inférieure de 30 à 100°C à la température de fusion du métal de revêtement.

13. Procédé selon la revendication 12, **caractérisé en ce que**, lorsque le substrat possède un revêtement métallique effectué par trempage, comme par galvanisation au trempé, le dépôt est effectué juste après le dépôt du revêtement métallique, avant que le substrat ne refroidisse.

14. Procédé selon la revendication 13, **caractérisé en ce que**, dans le cas d'un substrat sujet à une oxydation trop importante pour que celle-ci soit éliminée pendant le dépôt, on protège le substrat de contacts importants avec l'air grâce à un gaz neutre comme l'azote ou l'argon.

15. Procédé selon la revendication 12 ou 13, **caractérisé en ce que** le dépôt est limité dans le temps en faisant varier la hauteur d'immersion dans le cas d'un dépôt dans une solution ou la longueur arrosée dans le cas d'une projection de la solution par des gicleurs.

16. Procédé selon la revendication 1, **caractérisé en ce que** la solution est une solution aqueuse ou comprend tout autre solvant capable de disperser efficacement lesdites nanoparticules.

17. Procédé selon la revendication 1, **caractérisé en ce qu'**on ajoute à la solution de nanoparticules des agents pour l'amélioration de la résistance à la corrosion et/ou l'adhérence avec le substrat ou la peinture, et/ou pour favoriser le glissement lors du formage.

18. Procédé selon la revendication 1, **caractérisé en ce que** le substrat revêtu peut être rincé après post-traitement au moyen d'eau ou d'une solution à base de silanes organiques ou d'acide carboxylique contenant une fonction susceptible de former une liaison forte avec l'organique.

19. Procédé selon la revendication 1, **caractérisé en ce qu'**il comprend des étapes :
- de mesure et de régulation du pH en continu,
- pour assurer le renouvellement de la solution et l'élimination des produits excédentaires de la réaction,
- pour assurer le mélange homogène du bain, en vue d'éviter des turbulences à sa surface.

20. Procédé selon la revendication 7, **caractérisé en ce qu'**on contrôle la température de la bande et du bain, le temps de séjour de la bande dans le bain, la concentration en nanoparticules dans le bain et le pH du bain.

21. Procédé selon la revendication 8, **caractérisé en ce qu'**on contrôle la température de la bande, le temps d'arrosage, la concentration en nanoparticules dans la solution projetée, le débit de projection et le pH.

22. Produit métallurgique plat ou long, de préférence bande, fil, profilé ou tube, revêtu d'une couche protectrice ultrafine d'épaisseur inférieure à 100 nm, au moyen du procédé selon l'une quelconque des revendications 1 à 21, ladite couche protectrice comprenant au moins des nanoparticules d'oxyde SiO₂, **caractérisé en ce que** l'épaisseur dudit produit métallurgique, éventuellement l'épaisseur de départ avant réalisation d'un profilé ou un tube, est comprise entre 0,15 et 5 mm.

## Patentansprüche

1. Verfahren zur kontinuierlichen Beschichtung eines Substrats in Bewegung wie ein Metallband aus Stahl, wobei die gebildete Beschichtung ein ultradünner Film mit einer Dicke zwischen 10 bis 100 nm ist, der auf dem Substrat abgelagert wird:
- ausgehend von einer Lösung, die Nanopartikel aus Siliziumoxid oder Siliziumdioxid, SiO₂ und mindestens ein chemisches Additiv, Refiner genannt, enthält,
- unter kontrollierten basischen pH-Bedingungen zwischen 9 und 13,
- wobei das Substrat eine Temperatur über 120 °C hat,
- wobei die Gesamtdauer der Ablagerung unter 5 Sekunden beträgt und vorzugsweise unter 1 Sekunde,
**dadurch gekennzeichnet, dass** der Refiner aus der Gruppe der Verbindungen ausgewählt ist, die von dem Catechol und seinen Derivaten, den Boraten, den Natrium- und Kalium-Carbonaten und Hydrogencarbonaten, dem Ammoniumhydroxid und den wasserlöslichen Aminen gebildet wird.

2. Verfahren nach Anspruch 1, **dadurch gekennzeichnet, dass** das zu beschichtende Substrat entweder ein blankes Metall, vorzugsweise Stahl, rostfreier Stahl (oder Inox), Aluminium, Zink oder Kupfer ist oder ein erstes Metall, das mit einem zweiten Metall beschichtet ist, vorzugsweise ein mit einer Zink-, Aluminium-, Zinnschicht oder einer Legierung aus mindestens zwei dieser Metalle beschichtetes Stahlband.

3. Verfahren nach Anspruch 1, **dadurch gekennzeichnet, dass** die Lösung ferner Nanopartikel umfasst, die Oxide umfassen, die aus TiO₂, ZrO₂, Al₂O₃, CeO₂, Sb₂O₅, Y₂O₃, ZnO, SnO₂ oder Gemischen dieser Oxide ausgewählt sind, die hydrophil und/oder hydrophob sind, eine Größe zwischen 1 und 100 nm haben und sich in der Lösung in einem Gehalt zwischen 0,1 und 10 % und vorzugsweise zwischen 0,1 und 1 % befinden.

4. Verfahren nach Anspruch 1, **dadurch gekennzeichnet, dass** die Konzentration des Refiners zwischen 1 und 20 g je Liter (g/l) Lösung und vorzugsweise zwischen 5 und 10 g/l liegt.

5. Verfahren nach einem der vorangehenden Ansprüche, **dadurch gekennzeichnet, dass** der pH der Lösung derart angepasst ist, dass das Abbeizen oberflächlicher Oxide auf dem Metallsubstrat bei seinem Kontakt mit der Lösung erlaubt wird, so dass den Partikeln eine maximale elektrische Ladung verliehen wird, um jedwede Zusammenballung in der Lösung zu verhindern und dass die Partikel so reaktionsfreudig wie möglich gemacht werden können, ohne die Lösung zu destabilisieren.

6. Verfahren nach Anspruch 5, **dadurch gekennzeichnet, dass** der pH der Lösung angepasst ist, damit die Lösung dauerhaft stabil ist.

7. Verfahren nach Anspruch 1, **dadurch gekennzeichnet, dass** die Ablagerung durch zeitlich kontrolliertes Eintauchen des Substrats in ein Temperbad, das die Lösung enthält, durchgeführt wird.

8. Verfahren nach Anspruch 1, **dadurch gekennzeichnet, dass** die Ablagerung durch Projektion der Lösung auf das Substrat mit Hilfe einer Spritzdüse durchgeführt wird, das heißt einer Vorrichtung, die entweder mit Druckgas arbeitet oder nicht, die Tröpfchen der Lösung versprüht.

9. Verfahren nach Anspruch 1, **dadurch gekennzeichnet, dass** die Ablagerung durch Ablagern der Lösung auf dem Substrat mit Hilfe einer Walze durchgeführt wird.

10. Verfahren nach Anspruch 1, **dadurch gekennzeichnet, dass** die Lösung, die mit dem Band in Kontakt kommt, auf einer Temperatur unter 100 °C und vorzugsweise unter 80 °C gehalten wird.

11. Verfahren nach Anspruch 1, **dadurch gekennzeichnet, dass** die Temperatur des Substrats zu Beginn der Ablagerung höher als 125 °C und niedriger als 250 °C ist.

12. Verfahren nach Anspruch 1, **dadurch gekennzeichnet, dass**, wenn das Substrat vor der Behandlung bereits eine metallische Beschichtung besitzt, die Temperatur des Substrats zu Beginn der Ablagerung höher als 125 °C und um 30 bis 100 °C niedriger als die Schmelztemperatur des Metalls der Beschichtung ist.

13. Verfahren nach Anspruch 12, **dadurch gekennzeichnet, dass**, wenn das Substrat eine metallische Beschichtung besitzt, die durch Eintauchen durchgeführt wurde, wie beispielsweise durch Galvanisieren, die Ablagerung direkt nach der Ablagerung der metallischen Beschichtung durchgeführt wird, noch bevor sich das Substrat abkühlt.

14. Verfahren nach Anspruch 13, **dadurch gekennzeichnet, dass** im Fall eines Substrats, das so stark oxidiert, dass die Oxidation bei der Ablagerung nicht entfernt werden würde, das Substrat vor ausgeprägtem Luftkontakt mit einem neutralen Gas wie Stickstoff oder Argon geschützt wird.

15. Verfahren nach Anspruch 12 oder 13, **dadurch gekennzeichnet, dass** die Ablagerung zeitlich begrenzt ist, indem bei einer Ablagerung in einer Lösung die Eintauchtiefe oder im Fall eines Aufsprühens der Lösung durch Spritzdüsen die Dauer des Besprühens variiert.

16. Verfahren nach Anspruch 1, **dadurch gekennzeichnet, dass** die Lösung eine wässrige Lösung ist oder jedes andere Lösungsmittel umfasst, das imstande ist, die Nanopartikel effizient zu verteilen.

17. Verfahren nach Anspruch 1, **dadurch gekennzeichnet, dass** der Nanopartikellösung Mittel zur Verbesserung der Korrosionsbeständigkeit und/oder der Haftung mit dem Substrat oder der Farbe und/oder zur Verbesserung der Gleitfähigkeit beim Formen hinzugefügt werden.

18. Verfahren nach Anspruch 1, **dadurch gekennzeichnet, dass** das beschichtete Substrat nach der Nachbehandlung mit Wasser oder einer Lösung auf der Basis organischer Silane oder Carboxylsäure abgespült werden kann, die eine Funktion enthält, die imstande ist, eine starke Bindung mit Organischem einzugehen.

19. Verfahren nach Anspruch 1, **dadurch gekennzeichnet, dass** es Schritte umfasst:
- des kontinuierlichen Messens und Einstellens des pH,
- zur Sicherstellung der Erneuerung der Lösung und Entfernung von überschüssigen Reaktionsprodukten,
- um die homogene Mischung des Bads sicherzustellen, um Turbulenzen auf seiner Oberfläche zu verhindern.

20. Verfahren nach Anspruch 7, **dadurch gekennzeichnet, dass** die Temperatur von Band und Bad, die Aufenthaltsdauer des Bands im Bad, die Nanopartikel-Konzentration im Bad und der pH des Bads überwacht werden.

21. Verfahren nach Anspruch 8, **dadurch gekennzeichnet, dass** die Temperatur des Bands, die Sprühdauer, die Nanopartikel-Konzentration in der projizierten Lösung, der Projektionsdurchsatz und der pH überwacht werden.

22. Flaches oder langes metallurgisches Produkt, vorzugsweise ein Band, ein Draht, ein Profil oder ein Rohr, das mit Hilfe des Verfahrens nach einem der Ansprüche 1 bis 21 mit einer ultradünnen Schutzschicht mit einer Dicke von weniger als 100 nm überzogen wird, wobei die Schutzschicht mindestens SiO2-Oxid-Nanopartikel umfasst, **dadurch gekennzeichnet, dass** die Dicke des metallurgischen Produkts, eventuell die Ausgangsdicke vor der Herstellung eines Profils oder eines Rohrs, zwischen 0,15 und 5 mm liegt.

## Claims

1. Method for continuously coating a substrate in motion such as a metal strip made of steel, the coating formed being an ultra-fine film of a thickness of between 10 and 100nm, deposited on the substrate:
- from a solution containing nanoparticles of silicon oxides or silica, SiO₂, and at least one chemical additive, called refiner,
- in conditions of controlled alkaline pH, comprised between 9 and 13,
- said substrate being at a temperature higher than 120°C,
- the total duration of the deposition being less than 5 seconds, preferably less than 1 second,
**characterised in that** the refiner is selected from the group of compounds comprising catechol and its derivatives, borates, sodium and potassium carbonates and hydrogen carbonates, ammonium hydroxide and amines that are soluble in water.

2. Method according to Claim 1, **characterised in that** that substrate to be coated is either a bare metal, preferably steel, stainless steel (or "inox"), aluminium, zinc or copper, or a first metal coated with a second metal, preferably a strip of steel coated with a layer of zinc, aluminium, tin or an alloy of at least two of these metals.

3. Method according to Claim 1, **characterised in that** the solution moreover contains nanoparticles that comprise oxides chosen from among TiO₂, ZrO₂, Al₂O₃, Ce02, Sb₂O₅, Y₂O₃, ZnO, SnO₂ or mixtures of these oxides, are hydrophilic and/or hydrophobic, have a size of between 1 and 100nm and are in the solution at a content of between 0.1 and 10%, and preferably between 0.1 and 1%.

4. Method according to Claim 1, **characterised in that** the concentration of refiner is between 1 and 20 g per litre (g/L) of solution, preferably between 5 and 10g/L.

5. Method according to any one of the preceding claims, **characterised in that** the pH of the solution is adjusted so as to allow the pickling of surface oxides from the metal substrate when it is in contact with the solution, to give a maximum electrical charge to the particles in order to avoid any agglomeration in the solution and to make the particles as reactive as possible without destabilising the solution.

6. Method according to Claim 5, **characterised in that** the pH of the solution is adjusted so that the solution is stable over time.

7. Method according to Claim 1, **characterised in that** the deposition is achieved by immersion of the substrate for a controlled period of time in an immersion tank comprising the solution.

8. Method according to Claim 1, **characterised in that** the deposition is achieved by spraying the solution onto the substrate by means of a nozzle, i.e. a device, assisted or not, with under pressure gas, that sprays droplets of the solution.

9. Method according to Claim 1, **characterised in that** the deposition is achieved by deposition of the solution on the substrate by means of a roller.

10. Method according to Claim 1, **characterised in that** the solution that comes into contact with the strip is maintained at a temperature lower than 100°C and preferably lower than 80°C.

11. Method according to Claim 1, **characterised in that** the temperature of the substrate at the start of the deposition is higher than 125°C and lower than 250°C.

12. Method according to Claim 1, **characterised in that**, when the substrate already has a metallic coating before treatment, the temperature of the substrate at the start of the deposition is higher than 125°C and lower by 30 to 100°C than the melting point of the coating metal.

13. Method according to Claim 12, **characterised in that**, when the substrate has a metallic coating achieved by immersion, as for example in galvanisation by immersion, the deposition is achieved just after the deposition of the metallic coating, before the substrate cools down.

14. Method according to Claim 13, **characterised in that**, in the case of a substrate liable to a too-high level of oxidation for the latter to be eliminated during deposition, the substrate is protected from excessive contact with air by means of a neutral gas such as nitrogen or argon.

15. Method according to Claim 12 or 13, **characterised in that** the deposition is limited in time by varying the depth of immersion in the case of deposition in a solution or the length sprayed in the case of spraying the solution with nozzles.

16. Method according to Claim 1, **characterised in that** the solution is an aqueous solution or comprises any other solvent capable of effectively dispersing said nanoparticles.

17. Method according to Claim 1, **characterised in that** agents for the improvement of resistance to corrosion and/or adhesion to the substrate or the paint and/or for the promotion of glide during formation are added to the solution of nanoparticles.

18. Method according to Claim 1, **characterised in that** the coated substrate may be rinsed after post-treatment by means of water or of a solution based on organic silanes or carboxylic acid having an ability to form a strong link with the organic.

19. Method according to Claim 1, **characterised in that** it comprises the steps of:
- continuously measuring and regulating the pH,
- ensuring the renewal of the solution and the elimination of excess products of the reaction,
- ensuring the homogeneous mixture of the bath so as to avoid turbulence on its surface.

20. Method according to Claim 7, **characterised in that** the temperatures of the strip and of the bath, the time that the strip remains in the bath, the concentration of nanoparticles in the bath and the pH of the bath are controlled.

21. Method according to Claim 8, **characterised in that** the temperature of the strip, the length of spraying time, the concentration of nanoparticles in the solution sprayed, the spraying flow and the pH are controlled.

22. Flat or long metallurgical product, preferably a strip, wire, profiled section or tube, coated with an ultra-fine protective layer of a thickness that is less than 100nm, by means of the method according to any one of Claims 1 to 21, said protective layer comprising at least nanoparticles of Si02 oxide, **characterised in that** the thickness of said metallurgical product, possibly the start thickness before a profiled section or a tube is achieved, is comprised between 0.15 and 5mm.
